Europäisches Patentamt

European Patent Office

Office européen des brevets

(11) Veröffentlichungsnummer : **0 157 163**
**B1**

(12) **EUROPÄISCHE PATENTSCHRIFT**

(45) Veröffentlichungstag der Patentschrift :
09.09.87

(51) Int. Cl.⁴ : **D 21 B   1/32**, D 21 F   1/70,
**B 03 D   1/14**

(21) Anmeldenummer : 85102085.9

(22) Anmeldetag : 26.02.85

(54) Verfahren und Vorrichtung zum Flotieren von Dispersionen.

(30) Priorität : 27.02.84 DE 3406990

(43) Veröffentlichungstag der Anmeldung :
09.10.85 Patentblatt 85/41

(45) Bekanntmachung des Hinweises auf die Patenterteilung : 09.09.87 Patentblatt 87/37

(84) Benannte Vertragsstaaten :
AT BE CH DE FR GB IT LI NL SE

(56) Entgegenhaltungen :
EP-A- 0 037 513
WO-A-80 /004 23
FR-A-   703 922

(73) Patentinhaber : **Feldmühle Aktiengesellschaft**
**Fritz-Vomfelde-Platz 4**
**D-4000 Düsseldorf 11 (DE)**

**E. + M. Lamort Société Anonyme dite:**
**rue de la Fontaine Ludot**
**F-51300 Vitry-le-François (FR)**

(72) Erfinder : **Barnscheidt, Wolfgang, Dr. Dipl.-Ing.**
**u.Dipl.-Phys**
**Am alten Schalg 1**
**D-4047 Dormagen-Straberg (DE)**

**Beschreibung**

Die Erfindung betrifft ein Verfahren und eine Vorrichtung zum Flotieren von Dispersionen, insbesondere Fasern enthaltende Dispersionen, bei dem die mit Luft beladene Dispersion als Primärstrom in eine Flotationszelle eingebracht, der sich auf der Oberfläche der Dispersion bildende Schaum mit den darin befindlichen Verunreinigungen abgeführt, mehr als 100 % des Primärstromes als gereinigte Dispersion abgezogen, erneut mit Luft beladen und als Sekundärstrom der Flotationszelle erneut zugeführt wird, wobei die Flotationszelle im wesentlichen aus einem zylindrischen Behälter mit darin angeordneter Hohlsäule besteht, der zylindrische Behälter in seinem oberen Bereich von einer Ringzelle umgeben ist, die den zylindrischen Behälter überragt und die zumindest einen Anschluß für das Abziehen gereinigter Dispersion aufweist, wobei der zylindrische Behälter zumindest einen Anschluß zum Einbringen des Primärstromes der belüfteten Dispersion besitzt.

Ein solches Verfahren ist aus der DE-C-28 36 496 bekannt, ein sehr ähnliches Verfahren aus der DE-C-29 14 392, die im wesentlichen der WO-A-80/00 423 entspricht. Beiden Verfahren ist gemeinsam, daß ein Teil der gereinigten Dispersion im Kreislauf geführt und zur weiteren Reinigung erneut mit Luft beladen wird, um eine höhere Reinigungswirkung zu erzielen.

Gemäß DE-C-28 36 496 wird dabei max. 50 % des bereits gereinigten sogenannten Gutstoffes im Kreislauf geführt und erneut belüftet. Gemäß DE-C-29 14 392 bzw. WO-A-80/00 423 beträgt die rückgeführte Gutstoffmenge max. 150 %. Die statistische Wahrscheinlichkeit, daß bei diesen Verfahren, d. h. bei der Reinigung von Dipersionen in einer einzigen Flotationszelle durch zusätzliche Belüftung, also Führung der Dispersion im Kreislauf, die gesamte Dispersion zweimal belüftet wird, ist schon rein rechnerisch nicht gegeben.

Der Flotationszelle wird 100 % Dispersion zugeführt, die eine Weile in der Flotationszelle bleibt und danach abgezogen wird. Aus diesem Abzug wird gleichzeitig die Dispersionsmenge abgenommen, erneut belüftet und wieder in die Flotationszelle zurückgeführt, die im Kreislauf geführt werden soll. Gemäß DE-C-29 14 392 bzw. WO-A-80/00 423 also 150 %. Damit müssen insgesamt aus der Zelle 250 % abgezogen werden, wovon 100 % oder 2/5 des gesamten Stoffes der Weiterverarbeitung zugeführt werden, während 3/5 oder 150 % erneut belüftet und in die Flotationszelle zurückgeführt werden. Die Dispersion wird also im Schnitt 1,6-mal belüftet, wobei die Möglichkeit vorhanden ist, daß einzelne Teilströme der Dispersion nur einmal, andere dafür aber 2 1/2-mal belüftet werden.

Durch Erhöhung der im Kreislauf geführten Dispersionsmenge läßt sich der Wert von 1,6 noch weiter erhöhen. Die Gefahr, daß einzelne Teilströme der Dispersion aber weiterhin nur einmal belüftet werden, bleibt, unabhängig davon, wie oft andere Teilströme belüftet werden, bestehen. Auf der anderen Seite ist jedoch die Reinigungswirkung einer Flotationszelle davon abhängig, daß alle Verunreinigungen mit dem Schaum abgeführt werden, wenn man eine absolute Reinigungswirkung erreichen wollte. Werden also besonders hohe Anforderungen an die Reinheit gestellt, so war es nach dem Stand der Technik üblich, zwei Flotationszellen gemäß der beiden vorzitierten Patentschriften hintereinander zu schalten.

Der vorliegenden Patentanmeldung liegt die Aufgabe zugrunde, mit einer einzigen Flotationszelle die gleiche Wirkung zu erzielen, wie sie bisher nur mit mehreren, hintereinander geschalteten, erzielt werden konnte, wobei es dabei gleichgültig war, ob diese Aggregate neben oder übereinander angebracht waren, d. h. also, sicherzustellen, daß die gesamte Dispersion mindestens zweimal in einer Flotationszelle durch Belüftung gereinigt wird. Die Lösung liegt in einem Verfahren zum Flotieren von Dispersionen gemäß kennzeichnendem Teil des Anspruchs 1.

Gemäß der Erfindung wird der bereits einmal belüftete Primärstoff im Bodenbereich der Flotationszelle, also aus dem zylindrischen Behälter, abgezogen, wobei das Abziehen dieses Primärstoffes unterhalb der Anschlüsse zum Einbringen des Primärstromes erfolgt. Dieser sogenannte Gutstoff enthält keine Luftblasen mehr, da diese nach oben steigen und auf der Oberfläche der Flotationszelle einen Schaumteppich bilden.

Die abgezogene Gutstoffmenge ist größer als die mit dem Primärstrom eingebrachte Menge und wird oberhalb des Anschlusses zum Einbringen des Primärstromes in den Zylindrischen Behälter nach erneuter Belüftung zurückgeführt. Dadurch ergibt sich im Behälter eine Schichtung, d. h. oberhalb des Sekundärstutzen befindet sich ausschließlich zweifach belüftete Dispersion, darunter befindet sich einfach belüftete Dispersion und ein geringer Anteil zweifach belüfteter Dispersion, da mehr als 100 % der eingebrachten einfach belüfteten Dispersion, also des Primärstromes, abgezogen und nach erneuter Belüftung als Sekundärstrom wieder in die Zelle zurückgeführt wird. Durch das größere Volumen des Sekundärstromes in Verbindung mit der Einbringung des Sekundärstromes oberhalb — oder unter einem leicht geneigten Winkel nach oben — des Einbringungsortes des Primärstromes ist sichergestellt, daß keine Teilströme des Primärstromes in der Flotationszelle nach oben steigen können, es wird vielmehr ein Teil des Sekundärstromes noch zusätzlich nach unten abgesaugt, um die Rückführung von mehr als 100 % des Primärstromes zu sichern. Dadurch ergibt sich in der Flotationszelle automatisch eine Sperre, die das Aufsteigen des Primärstromes über den Einbringungspunkt des Sekundärstromes verhindert und damit sicherstellt, daß die gesamte eingebrachte Dispersionsmenge zweimal belüftet wird.

Um zu gewährleisten, daß keine Vermischung zwischen Primär- und Sekundärstrom erfolgt, sehen zweckmäßige Ausgestaltungen der Erfindung vor, daß die Zuführung des Primärstromes horizontal oder unter einem von der Horizontalen nach unten gerichteten flachen Winkel α erfolgt und daß die Zuführung des Sekundärstromes ebenfalls horizontal oder unter einem von der Horizontalen nach oben gerichteten flachen Winkel β erfolgt. Der Winkel α liegt dabei vorzugsweise zwischen 0 und 30 Grad, der Winkel β zwischen 0 und 20 Grad. Werden sowohl Primärstrom als auch Sekundärstrom unter einem von der Horizontalen abweichenden Winkel eingebracht, so ist es möglich, den Niveauunterschied zwischen den beiden Einbringungsstellen äußerst gering zu halten und damit die Bauhöhe der Flotationszelle zu reduzieren. In jedem Fall ist aber sicherzustellen, daß keine Überschneidung der Strahlen von Primär- und Sekundärstrom erfolgen kann d. h. also entweder ist einer oder beide Winkel relativ groß zu wählen, oder ein größerer Abstand zwischen den Einbringungsstellen vorzusehen.

Das Verfahren wird vorteilhaft mit einer Vorrichtung durchgeführt, die im wesentlichen aus einem zylindrischen Behälter mit darin angeordneter Hohlsäule besteht, wobei der zylindrische Behälter in seinem oberen Bereich von einer Ringzelle umgeben ist, die den zylindrischen Behälter überragt und die zumindest einen Anschluß für das Abziehen gereinigter Dispersion aufweist, wobei der zylindrische Behälter zumindest einen Anschluß zum Einbringen des Primärstromes der belüfteten Dispersion besitzt und durch die Kombination folgender Merkmale gekennzeichnet ist.

Im Bodenbereich des zylindrischen Behälters ist tangential ein Abzugsstutzen angeordnet, über eine Pumpe ist dieser mit einem ebenfalls tangential angeordneten Sekundärstutzen verbunden, der Sekundärstutzen ist oberhalb des Anschlusses für den Primärstrom angeordnet.

Dabei beträgt der Abstand zwischen dem Sekundärstutzen und dem Anschluß vorteilhaft 200 bis 500 mm.

Die tangentiale Anordnung des Stutzens führt sowohl beim Absaugen als auch beim Einbringen der Dispersion zu einer gewissen rotierenden Bewegung. Diese rotierende Bewegung sorgt dafür, daß kein Entmischen der Dispersion stattfindet, was allerdings nicht bedeutet, daß sich nicht die Luftblasen nach oben bewegen könnten.

Eine sehr vorteilhafte Ausgestaltung der Erfindung sieht vor, daß der Sekundärstutzen mit einem unterhalb der Ringzelle an dem zylindrischen Behälter angeordneten Trichterring verbunden ist.

Durch die Anordnung des Sekundärstutzens am Trichterring wird beim Eindüsen des Sekundärstromes, insbesondere, wenn gemäß einer weiteren vorteilhaften Ausgestaltung der Erfindung, der Trichterring durch eine Prallwand vom zylindrischen Behälter getrennt ist, sichergestellt, daß keine Vermischung der einzelnen Stoffströme stattfindet. Gleichzeitig erfolgt auch ein trennen der aufsteigenden Luftblasen, so daß sich an der Oberfläche der Faserstoffsuspension konzentrische Schaumringe unterschiedlicher Färbung bilden, d. h. der Innenring mit den von der Primärbelüftung herführenden Luftblasen deutlich eine dunklere Färbung zeigt als der mittlere Ring. Dieser ist wiederum dunkler als der Außenring, wo der Schaum von den Gegenstrominjektoren erzeugt wird, die die dritte Belüftung, genauer gesagt eine Belüftung eines Teilstromes als dritte Belüftung durchführen.

Die Erfindung wird nachstehend anhand der Zeichnungen beschrieben.

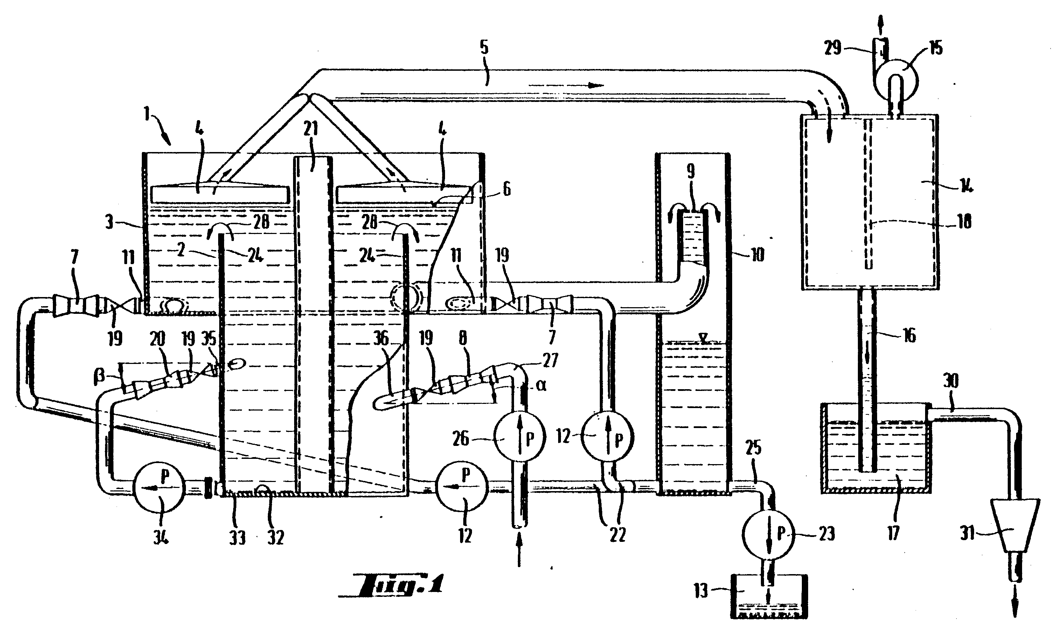

Figur 1 zeigt schematisch den Schnitt durch eine erfindungsgemäß Flotationszelle,

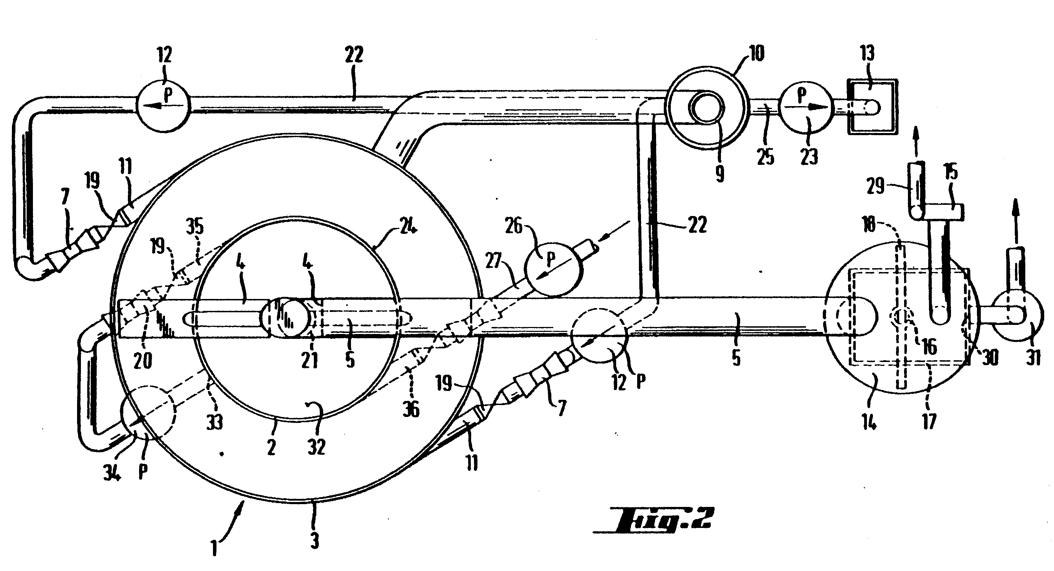

Figur 2 die Draufsicht auf das gleiche Aggregat,

Figur 3 eine Modifikation von Figur 1.

Über die Pumpe (26) wird Faserstoffsuspension, die bereits chemisch und physikalisch aufgeschlossene Altpapierpulpe ist, als Primärstrom der Zuleitung (27) zugeführt, die die Pumpe (26) mit dem Anschluß (36), der den Injektor (8) trägt, verbindet. Der Anschluß (36) und damit der Injektor (8) ist um einen Winkel α von 15 Grad gegenüber der Horizontalen nach unten geneigt und ca. 500 mm oberhalb des Bodenbereiches (32) der Flotationszelle (1) angeordnet. Die Faserstoffsuspension wird durch den Injektor (8) belüftet und steigt mit den sich bildenden Blasen im zylindrischen Behälter (2), dessen Zentrum die Hohlsäule (21) bildet, nach oben, wo sie in Richtung der Pfeile (28) über das von dem zylindrischen Behälter (2) bzw. der verlängerten Wandung des Trichterringes (37) gebildete Wehr (24) tritt und in die Ringzelle (3) gelangt. Nach Auffüllen der Ringzelle (3) steigt die Faserstoffsuspension auf ein Niveau (6), das durch die Höhe des Überlaufs (9), der die Ringzelle (3) mit dem Überlaufsammler (10) verbindet, gegeben ist.

Eine im Bodenbereich (32) angeschlossene Kreislaufpumpe (34) zieht unterhalb des Anschlusses (36) für den Primärstrom mehr als 100 %, im allgemeinen mindestens 105 %, der zugeführten Faserstoffsuspension durch den Absaugstutzen (33) ab und führt diese Menge nach Belüftung durch Kreislaufinjektoren (20), die mit dem Sekundärstutzen (35) verflanscht sind, dem zylindrischen Behälter (2) wieder zu. Die Sekundärstutzen (35) sind dabei unter einem Winkel β von 15 Grad nach oben gerichtet.

Dieser Sekundärstrom der Faserstoffsuspension sondert ebenso wie der Primärstrom der Faserstoffsuspension Luftblasen ab, die nach oben steigen und an die sich Schmutzpartikel anlagern. Diese Schmutzpartikel bilden zusammen mit den Luftblasen eine Schaumschicht, die sich oberhalb des Wehres (24) aufbaut und durch Saugdüsen (4), die an einer Saugleitung (5) angeordnet sind, abgesaugt wird. Die Saugleitung (5) endet in einem Abscheider (14), in dem durch einen Ventilator (15) ein Vakuum erzeugt wird.

Die Abluft verläßt über den Abluftstutzen (29) den Abscheider (14), der abgesaugte Schaum bricht zusammen und schlägt sich im unteren Bereich des Abscheiders (14) nieder, bevor er über das Fallrohr (16) in den Schmutzsammler (17) gelangt. Dadurch passiert kein Schaum das Umleitblech (18), so daß nur von Schaum befreite Abluft den Ventilator (15) erreicht.

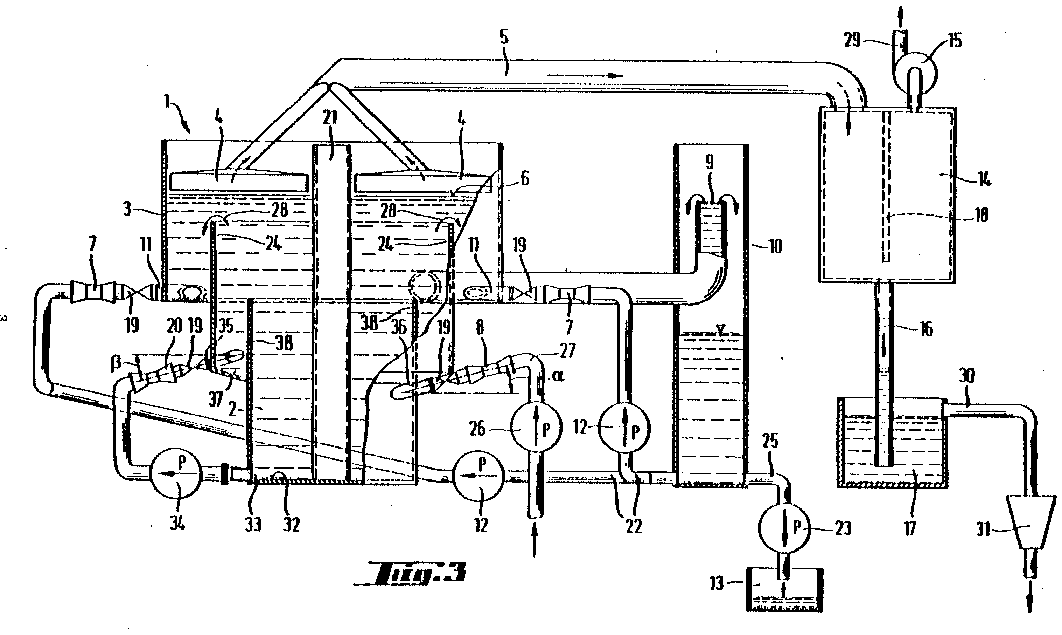

In Figur 3 ist die Flotationszelle als drei-stufiges Aggregat dargestellt. Unterhalb der Ringzelle (3), den zylindrischen Behälter (2) teilweise umgreifend, ist ein Trichterring (37) angeordnet, in den die Sekundärstutzen (35) münden. Die Sekundärstutzen (35) treten dabei tangential ein, wodurch auch bei der Aufweitung des Strahles, der dann die Prallwand (38) als Verlängerung des zylindrischen Behälters (2) berührt, eine Trennung des Primärstromes vom Sekundärstrom gewährleistet ist.

Der Schmutzsammler (17) ist über einen Überlauf (30) mit einer Eindickstation (31) verbunden, dabei handelt es sich meist um eine Kombination von Zentrifuge und Filter.

Aus dem Überlaufsammler (10) wird durch eine an die Gutstoffleitung (22) angeschlossene Gegenstrompumpe (12) Gutstoff aus der Ringzelle (3) abgezogen, über Gegenstrominjektoren (7) erneut belüftet und wieder der Ringzelle (3) zugeführt. Die Gegenstrominjektoren (7) sind dabei tangential zur Ringzelle (3) angeordnet, so daß in der Ringzelle (3) eine gewisse rotierende Bewegung entsteht, die den sich auf der Oberfläche ansammelnden Schaum kontinuierlich zu den Saugdüsen (4) treibt.

Der ebenfalls an dem Überlaufsammler (10) angreifende Gutstoffabzug (25) ist mit der Gutstoffpumpe (23) verbunden, die den Gutstoff in die Bütte (13) transportiert, von wo er zu der nicht dargestellten Papiermaschine gefördert wird.

Die Injektoren (8) sind ebenso wie die Gegenstrominjektoren (7) und die Kreislaufinjektoren (20) durch Absperrventile (19) von der Ringzelle (3) und den jeweiligen Zuleitungen getrennt. Das Einschließen der Injektoren (7, 8, 20) zwischen Absperrventile (19) ermöglicht ohne Entleeren des zylindrischen Behälters (2) eine Inspektion bzw. Reinigung der Injektoren (7, 8, 20).

## Patentansprüche

1. Verfahren zum Flotieren von Dispersionen, insbesondere Fasern enthaltende Dispersionen, bei dem die mit Luft beladene Dispersion als Primärstrom in eine Flotationszelle (1) eingebracht, der sich auf der Oberfläche der Dispersion bildende Schaum mit den darin befindlichen Verunreinigungen abgeführt, mehr als 100 % des Primärstromes als gereinigte Dispersion abgezogen, erneut mit Luft beladen und als Sekundärstrom der Flotationszelle (1) erneut zugeführt wird, wobei die Flotationszelle (1) im wesentlichen aus einem zylindrischen Behälter (2) mit darin angeordneter Hohlsäule (21) besteht, der zylindrische Behälter (2) in seinem oberen Bereich von einer Ringzelle (3) umgeben ist, die den zylindrischen Behälter (2) überragt und die zumindest einen Anschluß für das Abziehen gereinigter Dispersion aufweist, wobei der zylindrische Behälter (2) zumindest einen Anschluß (36) zum Einbringen des Primärstromes der belüfteten Dispersion besitzt, dadurch gekennzeichnet, daß aus dem Bodenbereich (32) des zylinderförmigen Behälters (2) als Sekundärstrom mehr als 100 % des Primärstromes entnommen und im Kreislauf der Flotationszelle (1) oberhalb des Anschlusses (36) für den Primärstrom zugeführt wird.

2. Verfahren nach Anspruch 1, dadurch gekennzeichnet, daß die Zuführung des Primärstromes horizontal oder unter einem von der Horizontalen nach unten gerichteten flachen Winkel erfolgt.

3. Verfahren nach Anspruch 1 oder 2, dadurch gekennzeichnet, daß die Zuführung des Sekundärstromes horizontal oder unter einem von der Horizontalen nach oben gerichteten flachen Winkel erfolgt.

4. Vorrichtung zum Flotieren von Dispersionen, insbesondere Fasern enthaltende Dispersionen, die im wesentlichen aus einem zylindrischen Behälter (2) mit darin angeordneter Hohlsäule (21) besteht, wobei der zylindrische Behälter (2) in seinem oberen Bereich von einer Ringzelle (3) umgeben ist, die den zylindrischen Behälter (2) überragt und die zumindest einen Anschluß (36) für das Abziehen gereinigter Dispersion aufweist, wobei der zylindrische Behälter (2) einen Anschluß (36) zum Einbringen des Primärstromes der belüfteten Dispersion besitzt, gekennzeichnet durch die Kombination folgender Merkmale : Im Bodenbereich (32) des zylindrischen Behälters (2) ist tangential ein Absaugstutzen (33) angeordnet, über eine Kreislaufpumpe (34) ist dieser mit einem ebenfalls tangential angeordneten Sekundärstutzen (35) verbunden, der Sekundärstutzen (35) ist oberhalb des Anschlusses (36) für den Primärstrom angeordnet.

5. Der Sekundärstutzen (35) ist 200 mm bis 500 mm oberhalb des Anschlusses (36) angeordnet.

6. Der Sekundärstutzen (35) ist unter einem Winkel β zwischen 0 und 30 Grad gegenüber der Horizontalen nach oben gerichtet.

7. Vorrichtung nach einem der Ansprüche 4 bis 6, dadurch gekennzeichnet, daß der Anschluß (36) unter einem Winkel α von 0 bis 20 Grad nach unten gerichtet ist.

8. Vorrichtung nach einem der Ansprüche 4 bis 7, dadurch gekennzeichnet, daß der Sekundärstutzen (35) mit einem unterhalb der Ringzelle (3) an dem zylindrischen Behälter (2) angeordnetem Trichterring (37) verbunden ist.

9. Vorrichtung nach einem der Ansprüche 4 bis 8, dadurch gekennzeichnet, daß der Trichterring (37) durch eine Prallwand (38) von dem zylindrischen Behälter (2) getrennt ist.

## Claims

1. Process for the flotation of dispersions, especially dispersions containing fibres, in which the dispersion, charged with air, is introduced into a flotation cell (1) as primary current, the foam that forms on the surface of the dispersion is removed together with the impurities it contains, more than 100 % of the primary current is withdrawn as purified dispersion and is again charged with air and is reintroduced into the flotation cell (1) as secondary current, the flotation cell (1) consisting essentially of a cylindrical container (2) with a hollow column (21) arranged therein, the cylindrical container (2) being surrounded in its upper region by an annular cell (3) which projects beyond the cylindrical container (2) and has at least one connection for the withdrawal of purified dispersion, and the cylindrical container (2) having at least one connection (36) for the introduction of the primary current of aerated dispersion, characterised in that more than 100 % of the primary current is removed as secondary current from the base region (32) of the cylindrical container (2) and is recirculated to the flotation cell (1) above the connection (36) for the primary current.

2. Process according to claim 1, characterised in that the primary current is supplied horizontally or at a shallow angle directed downwards from the horizontal.

3. Process according to claim 1 or 2, characterised in that the secondary current is supplied horizontally or at a shallow angle directed upwards from the horizontal.

4. Apparatus for the flotation of dispersions, especially dispersions containing fibres, which essentially consists of a cylindrical container (2) with a hollow column (21) arranged therein, the cylindrical container (2) being surrounded in its upper region by an annular cell (3) which projects beyond the cylindrical container (2) and has at least one connection (36) for the withdrawal of purified dispersion, the cylindrical container (2) having a connection (36) for the introduction of the primary current of aerated dispersion, characterised by the combination of the following features : an outlet connector piece (33) is tangentially arranged in the base region (32) of the cylindrical container (2), this connector piece (33) is connected via a circulating pump (34) to a secondary connector piece (35), which is likewise tangentially arranged, and the secondary connector piece (35) is arranged above the connection (36) for the primary current.

5. The secondary connector piece (35) is arranged from 200 mm to 500 mm above the connection (36).

6. The secondary connector piece (35) is directed upwards with respect to the horizontal at an angle β of between 0 and 30°.

7. Apparatus according to any one of claims 4 to 6, characterised in that the connection (36) is directed downwards at an angle α of from 0 to 20 °C.

8. Apparatus according to any one of claims 4 to 7, characterised in that the secondary connector piece (35) is connected to a funnel ring (37) arranged on the cylindrical container (2) below the annular cell (3).

9. Apparatus according to any one of claims 4 to 8, characterised in that the funnel ring (37) is separated from the cylindrical container (2) by a baffle wall (38).

**Revendications**

1. Procédé de flottation de dispersions, en particulier de dispersions contenant des fibres, selon lequel la dispersion chargée d'air est amenée en tant que courant primaire dans une cellule de flottation (1), la mousse se formant à la surface de la dispersion est évacuée avec les impuretés s'y trouvant, plus de 100 % du courant primaire sont extraits en tant que dispersion purifiée, chargés à nouveau d'air et introduits à nouveau dans la cellule de flottation (1) en tant que courant secondaire, la cellule de flottation (1) se composant pour l'essentiel d'un réservoir cylindrique (2) renfermant une colonne creuse (21), le réservoir cylindrique (2) étant entouré dans sa zone supérieure d'une cellule annulaire (3) qui dépasse le réservoir cylindrique (2) et présente au moins un raccord destiné à l'extraction de dispersion purifiée, le réservoir cylindrique (2) possèdant au moins un raccord (36) destiné à l'amenée du courant primaire de la dispersion aérée, caractérisé en ce que plus de 100 % du courant primaire sont extraits en tant que courant secondaire de la zone de fond (32) du réservoir cylindrique (2) et sont introduits dans le circuit de la cellule de flottation (1) au-dessus du raccord (36) destiné au courant primaire.

2. Procédé selon la revendication 1, caractérisé en ce que l'amenée du courant primaire s'effectue horizontalement ou sous un angle aigu par rapport à l'horizontale vers le bas.

3. Procédé selon la revendication 1 ou 2, caractérisé en ce que l'amenée du courant secondaire s'effectue horizontalement ou sous un angle aigu par rapport à l'horizontale vers le haut.

4. Dispositif de flottation de dispersions, en particulier de dispersions contenant des fibres, composé pour l'essentiel d'un réservoir cylindrique (2) renfermant une colonne creuse (21), le réservoir cylindrique (2) étant entouré dans sa zone supérieure d'une cellule annulaire (3) qui dépasse le réservoir cylindrique (2) et présente au moins un raccord (36) destiné à l'extraction de dispersion purifiée, le réservoir cylindrique (2) possèdant un raccord (36) destiné à l'amenée du courant primaire de la dispersion aérée, caractérisé par la combinaison des caractéristiques suivantes : une tubulure d'aspiration (33) est placée tangentiellement dans la zone de fond (32) du réservoir cylindrique (2) et est reliée par une pompe de recyclage (34) à une tubulure secondaire (35) placée également tangentiellement, la tubulure secondaire (35) étant placée au-dessus du raccord (36) destiné au courant primaire.

5. Dispositif selon la revendication 4, caractérisé en ce que la tubulure secondaire (35) est placée à une hauteur comprise entre 200 et 500 mm au-dessus du raccord (36).

6. Dispositif selon la revendication 4 ou 5, caractérisé en ce que la tubulure secondaire (35) est orientée vers le haut par rapport à l'horizontale, sous un angle β compris entre 0 et 30 degrés.

7. Dispositif selon l'une des revendications 4 à 6, caractérisé en ce que le raccord (36) est orienté vers le bas sous un angle α compris entre 0 et 20 degrés.

8. Dispositif selon l'une des revendications 1 à 7, caractérisé en ce que la tubulure secondaire (35) est reliée à une bague en entonnoir (37) placée sur le réservoir cylindrique (2) sous la cellule annulaire (3).

9. Dispositif selon l'une des revendications 4 à 8, caractérisé en ce que la bague en entonnoir (37) est séparée du réservoir cylindrique (2) par une paroi de rebondissement (38).

Fig.1

0 157 163

Fig.2

0 157 163

_Fig. 3_

0 157 163